# EUROPEAN PATENT APPLICATION

(11) **EP 4 614 691 A1**
(43) Date of publication of application: **10.09.2025**
(21) Application number: 24214571.2
(22) Date of filing: 21.11.2024
(51) Int. Cl.: H01M 50/178, H01M 50/533, H01M 50/54, H01M 50/557, H01M 50/564, B21D 5/04, H01R 43/16

(54) **SECONDARY BATTERY MANUFACTURING APPARATUS AND SECONDARY BATTERY MANUFACTURING METHOD**

(30) Priority: 06.03.2024 KR 20240032091
(71) Applicant: Samsung SDI Co., Ltd., Gyeonggi-do 17084 (KR)
(72) Inventor: KIM, Sang Gyu, 16678 Suwon-si (KR)
(74) Representative: Marks & Clerk LLP

(57) **Abstract**

The present disclosure relates to a secondary battery manufacturing apparatus and a secondary battery manufacturing method that are capable of adjusting a bending position and angle of a lead tab (31, 32) and improving energy density of a secondary battery. To this end, the present disclosure provides an secondary battery manufacturing apparatus, including a support member (110, 120) configured to support a lead tab including an electrode tab (31) extending from an electrode assembly (10) and an electrode lead (32) connected to the electrode tab, a first bending member (210) spaced apart from the support member and configured to press the electrode lead such that a first bending part (35) is formed on the electrode lead, and a second bending member (311, 312, 322, 323) connected to the support member and configured to move the support member such that a second bending part (36) is formed on the electrode tab.

## Description

### FIELD

Aspects of embodiments of the present disclosure relates to a secondary battery manufacturing apparatus and a secondary battery manufacturing method.

### BACKGROUND

In general, lithium secondary batteries are batteries including a positive electrode and a negative electrode, which include an active material capable of intercalating and deintercalating lithium ions, and an electrolyte, and generate electrical energy through oxidation/reduction reactions when lithium ions are intercalated/de-intercalated at the positive and negative electrodes.

The secondary battery may include an electrode assembly, a lead tab drawn out from the electrode assembly, and an exterior material surrounding the electrode assembly. A method of bending the lead tab to reduce a volume occupied by the lead tab is commonly used to enable the secondary battery to be used in electric vehicles, laptop computers, and the like.

The above-described information that forms the background of the present disclosure is only intended to improve understanding of the background of the present disclosure, and thus may include information that does not constitute the related art.

### SUMMARY

The present disclosure is directed to providing a secondary battery manufacturing apparatus and a secondary battery manufacturing method capable of adjusting a bending position and angle of a lead tab and improving energy density of a secondary battery.

These and other aspects and features of the present disclosure will be described in or will be apparent from the following description of some embodiments of the present disclosure.

According to an aspect of the present disclosure, there is provided a secondary battery manufacturing apparatus comprising a support member configured to support a lead tab including an electrode tab extending from an electrode assembly and an electrode lead connected to the electrode tab, a first bending member spaced apart from the support member and configured to press the electrode lead such that a first bending part is formed on the electrode lead, and a second bending member connected to the support member and configured to move the support member such that a second bending part is formed on the electrode tab.

The support member may include a first jig disposed to face one side of the lead tab, and a second jig spaced apart from the first jig and disposed to face the other side of the lead tab, wherein the first jig and the second jig may be brought into contact with or separated from the lead tab while being reciprocated in a direction parallel to a first direction.

The lead tab may further include a coupling part disposed between the electrode tab and the electrode lead, and the first jig and the second jig may be disposed to face each other with the coupling part interposed therebetween.

A width of the second jig in a direction perpendicular to the first direction may be less than a width of the coupling part in the direction perpendicular to the first direction.

A ratio of the width of the second jig to the width of the coupling part may be greater than or equal to 0.5 and less than 1.

The support member may further include a guide jig spaced apart from the second jig and configured to support the electrode assembly.

The guide jig may include a guide block disposed between the electrode assembly and the second jig and installed to be reciprocally movable in the direction parallel to the first direction, and a guide member extending from the guide block and brought into contact with or separated from the electrode assembly depending on a moving direction of the guide block.

The first bending member may include a pressing block spaced apart from the first jig and installed to be reciprocally movable in a direction parallel to a second direction inclined with respect to the first direction, and a pressing surface disposed at one side of the pressing block and interlocked with a movement of the pressing block to press the electrode lead toward the first jig.

The first jig may include a first contact surface brought into contact with one side of the lead tab, and a second contact surface disposed to intersect the first contact surface. An end portion of the electrode lead may protrude from the first contact surface, and the end portion of the electrode lead protruding from the first contact surface may be bent toward the second contact surface by a pressing force applied from the pressing surface.

The pressing surface may be disposed at an edge side of the pressing block and may include a damage prevention part having a curved shape.

The second bending member may include a support body configured to rotatably support the first jig, and a driving member disposed to face the first jig and configured to rotate the first jig with respect to the support body, and the electrode tab may be bent toward the electrode assembly as the first jig is rotated in a first rotational direction.

The driving member may include a cylindrical body, a cylinder rod movably connected to the cylindrical body, and a torque block connected to the cylinder rod and configured to press or depress the first jig depending on a moving direction of the cylinder rod.

The second bending member may further include a stopper configured to selectively restrict a movement of the cylinder rod.

The stopper may include a stopper body spaced apart from the cylindrical body, a first stopper extending from the cylinder rod and movably connected to the stopper body, and a second stopper fixed to the stopper body, and brought into contact with the first stopper as the torque block is moved a set distance from an initial position thereof toward the first jig.

The second bending member may further include a buffer member disposed to face the torque block and configured to support the torque block.

The torque block may have a curved surface, and the buffer member may include an opposing member movably installed in a direction parallel to a moving direction of the torque block and having an inclined surface formed to be inclined in a tangential direction with respect to the torque block, and an elastic member connected to the opposing member and configured to apply an elastic force to the opposing member in a direction toward the torque block.

According to an aspect of the present disclosure, there is provided a secondary battery manufacturing method including supporting, by a support member, a lead tab, which includes an electrode tab extending from an electrode assembly and an electrode lead connected to the electrode tab, forming by pressing the electrode lead by a first bending member a first bending part on the electrode lead, and forming by moving the support member by a second bending member a second bending part on the electrode tab.

The support member may include a first jig disposed to face one side of the lead tab, and a second jig spaced apart from the first jig and disposed to face the other side of the lead tab, and in supporting the lead tab, the first jig and the second jig may be moved in a direction parallel to a first direction and are brought into contact with both sides of the lead tab, respectively.

The first bending member may include a pressing block spaced apart from the first jig and installed to be reciprocally movable in a direction parallel to a second direction inclined with respect to the first direction, and a pressing surface disposed at one side of the pressing block, and the forming of the first bending part on the electrode lead may include moving the pressing block toward the electrode lead in the direction parallel to the second direction, and bending the electrode lead in a first bending direction by the pressing surface.

The second bending member may include a support body configured to rotatably support the first jig, and a driving member disposed to face the first jig and configured to rotate the first jig with respect to the support body, and the forming of the second bending part on the electrode tab may include rotating the first jig in a first rotational direction with respect to the support body by the driving member, and bending the electrode tab in a second bending direction opposite to the first bending direction by the first jig.

The secondary battery manufacturing method may be carried out using the secondary battery manufacturing apparatus as defined above or discussed below.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view schematically illustrating a configuration of a secondary battery according to an embodiment of the present disclosure;
FIG. 2 is a perspective view schematically illustrating a configuration of a secondary battery manufacturing apparatus according to an embodiment of the present disclosure;
FIG. 3 is a side view schematically illustrating a configuration of the secondary battery manufacturing apparatus according to an embodiment of the present disclosure;
FIG. 4 is an enlarged view schematically illustrating a configuration of the secondary battery manufacturing apparatus according to an embodiment of the present disclosure;
FIG. 5 is a flowchart schematically illustrating a sequence of a secondary battery manufacturing method according to an embodiment of the present disclosure;
FIG. 6 is a view schematically illustrating a process in which a support member supports a lead tab;
FIG. 7 is a flowchart schematically illustrating a sequence of an operation in which a first bending member forms a first bending part on an electrode lead;
FIGS. 8 to 11 are views schematically illustrating a process in which the first bending member forms the first bending part on the electrode lead;
FIG. 12 is a flowchart schematically illustrating a sequence of an operation in which a second bending member moves the support member to form a second bending part on the electrode tab; and
FIGS. 13 and 14 are views schematically illustrating a process in which the second bending member moves the support member to form the second bending part on the electrode tab.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of" 1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

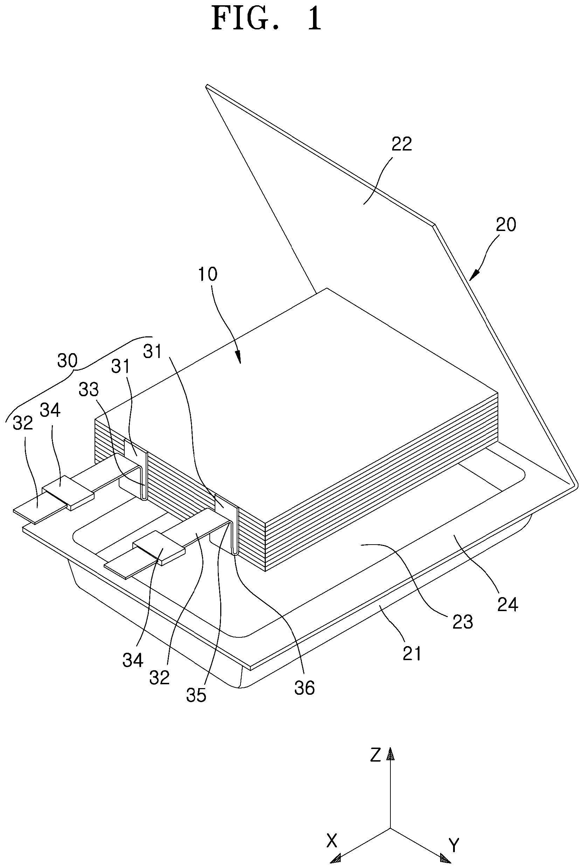

FIG. 1 is a perspective view schematically illustrating a configuration of a secondary battery according to an embodiment of the present disclosure.

Referring to FIG. 1, a secondary battery 1 includes an electrode assembly 10, a case 20, and a lead tab 30.

The electrode assembly 10 may include a first electrode plate, a second electrode plate, and a separator. As an example, the first electrode plate may operate as a negative electrode, and the second electrode plate may operate as a positive electrode.

The first electrode plate may be formed by applying, to a first electrode current collector formed of a metal foil such as a copper or nickel foil, a first electrode active material, such as graphite or carbon,. The first electrode plate may include a first electrode uncoated portion to which the first electrode active material is not applied. The first electrode uncoated portion provides a current flow path between the first electrode plate and the outside of the first electrode plate.

The second electrode plate may be formed by applying, to a second electrode current collector formed of a metal foil such as an aluminum foil, a second electrode active material, such as a transition metal oxide,. The second electrode plate may include a second electrode uncoated portion to which the second active material is not applied.

The separator is located between the first electrode plate and the second electrode plate and serves to prevent a short circuit and enable lithium ions to move therebetween. The separator may be made of polyethylene, polypropylene, or a composite film of polyethylene and polypropylene. In some examples, the separator may have a larger area than the first electrode plate and the second electrode plate to effectively prevent an electrical short circuit between the first electrode plate and the second electrode plate.

The electrode assembly 10 may be formed in a stack type in which the first electrode plate, the separator, the second electrode plate, and a separator are alternately stacked. Alternatively, the electrode assembly 10 may be formed in a jelly-roll type in which the first electrode plate, the separator, the second electrode plate, and the separator are wound around a winding axis.

The case 20 may accommodate the electrode assembly 10 and may form an exterior of the secondary battery 1.

The case 20 may include a body 21 and a cover 22 which are provided by folding a rectangular pouch film on the basis of a longitudinal direction of one side of the rectangular pouch film. Alternatively, the case 20 may not be formed as an integrated film, but may be formed with separate pouch films with separate folding portions of the body 21 and the cover 22. In some examples, the case 20 may include or be referred to as a pouch-type case or an exterior material. In some examples, the case 20 may be a multilayer thin film composed of a metal layer and an insulating layer formed on each of both surfaces of the metal layer.

The body 21 may include an accommodation part 23 that is a groove to accommodate the electrode assembly 10. In addition, the body 21 may include a sealing part 24 extending outwardly along an edge of the accommodation part 23. The case 20 may be sealed by seating the electrode assembly 10 in the accommodation part 23 and then thermally fusing the sealing part 24 and an edge of the cover 22 in a close contact state. The sealing part 24 is a part in which the body 21 and the cover 22 are fused to each other, and may extend flatly to a predetermined length.

The electrode assembly 10 may be accommodated in the case 20 together with an electrolyte. The electrolyte may include a lithium salt, such as LiPF₆ or LiBF₄, and an organic solvent, such as ethylene carbonate (EC), propylene carbonate (PC), diethyl carbonate (DEC), ethyl methyl carbonate (EMC), or dimethyl carbonate (DMC). In addition, the electrolyte may be in a liquid, solid, or gel phase.

The lead tab 30 may function as a component that electrically connects the electrode assembly 10 and an external terminal of the secondary battery 1.

A pair of lead tabs 30 may be provided. The pair of lead tabs 30 may be individually connected to the first electrode plate and the second electrode plate of the electrode assembly 10, respectively. The pair of lead tabs 30 may be individually connected to a negative electrode and a positive electrode of the external terminals of the secondary battery 1, respectively. The pair of lead tabs 30 may extend from one surface of the electrode assembly 10in the same direction. Alternatively, the pair of lead tabs 30 may extend from different surfaces of the electrode assembly 10in different directions.

Each of the lead tabs 30 may include an electrode tab 31 extending from the electrode assembly 10 and an electrode lead 32 connected to the electrode tab 31.

Hereinafter, a description will be made based on the lead tab 30 connected to the first electrode plate among the pair of lead tabs 30. The following description may be applied to the remaining lead tab 30 by changing only the fact that the lead tab 30 is connected to the second electrode plate.

The electrode tab 31 may be formed to have a substantially band shape. The electrode tab 31 may be electrically conductively provided, such as copper, nickel, aluminum, or the like. One end portion of the electrode tab 31 may be connected to the first electrode plate. The electrode tab 31 may be integrally formed with the first electrode plate, or alternatively, may be separately fabricated from the first electrode plate and subsequently coupled to the first electrode plate.

A plurality of electrode tabs 31 may be provided. The plurality of electrode tabs 31 may be individually connected to different first electrode plates. The other end portion of each of the plurality of electrode tabs 31 may protrude from the first electrode plate in the same direction (in an X-axis direction based on FIG. 1). The plurality of electrode tabs 31 may be disposed to be stacked in a height direction of the electrode assembly 10 (in a Z-axis direction based on FIG. 1).

The electrode lead 32 may be formed to have a substantially band shape. The electrode lead 32 may be electrically conductively provided, such as copper, nickel, aluminum, or the like. One end portion of the electrode lead 32 may be connected to the other end portion of the electrode tab 31 protruding from the electrode assembly 10.

A coupling part 33 may be formed between the electrode tab 31 and the electrode lead 32. The coupling part 33 may refer to a region, in which the electrode tab 31 and the electrode lead 32 overlap each other, in the entire region of the lead tab 30. As an example, the other end portion of the electrode tab 31 and one end portion of the electrode lead 32 may be integrally coupled by welding while being vertically stacked. In this case, the coupling part 33 may refer to an assembly of one end portion of the electrode lead 32 and the other end portion of the electrode tab 31, which are vertically stacked and integrated.

The other end portion of the electrode lead 32 may be withdrawn to the outside of the case 20.

The electrode lead 32 may include an insulating member 34 surrounding the electrode lead 32. The insulating member 34 may serve to prevent an electrical short circuit between the electrode lead 32 and the case 20. In some examples, the insulating member 34 may prevent an electrical short circuit between the electrode lead 32 and the metal layer of the case 20. The insulating member 34 may be located between the sealing part 24 of the body 21 and the cover 22. In some examples, the insulating member 34 may be thermally fused together with the sealing part 24 and the cover 22 when the sealing part 24 and the cover 22 are thermally fused.

The lead tab 30 may be bent and accommodated in the accommodation part 23.

As an example, a first bending part 35 and a second bending part 36 may be formed in the lead tab 30.

The first bending part 35 and the second bending part 36 may be disposed to be spaced apart from each other in an extending direction of the lead tab 30.

As an example, the first bending part 35 may be formed in the electrode lead 32. The first bending part 35 may be located between both end portions of the electrode lead 32. The both end portions of the electrode lead 32 may extend in different directions with respect to (i.e. either side of) the first bending part 35. The first bending part 35 may have a "U" or "V" or "L" shaped cross-sectional shape.

The second bending part 36 may be formed on the electrode tab 31. The second bending part 36 may be located between both end portions of the electrode tab 31. Both end portions of the electrode tab 31 may extend in different directions with respect to (i.e. either side of) the second bending part 36. The second bending part 36 may have a "U" or "V" shaped cross-sectional shape.

Bending angles of the first bending part 35 and the second bending part 36 may be different from each other. As an example, the bending angle of the first bending part 35 may be smaller than the bending angle of the second bending part 36. In other embodiments it may be greater than the bending angle of the second bending part 36 (not shown). The bending angle of the first bending part 35 may refer to a smaller angle among angles formed by both end portions of the electrode lead 32. The bending angle of the second bending part 36 may refer to a smaller angle among angles formed by both end portions of the electrode tab 31.

Hereinafter, a secondary battery manufacturing apparatus according to one embodiment of the present disclosure will be described.

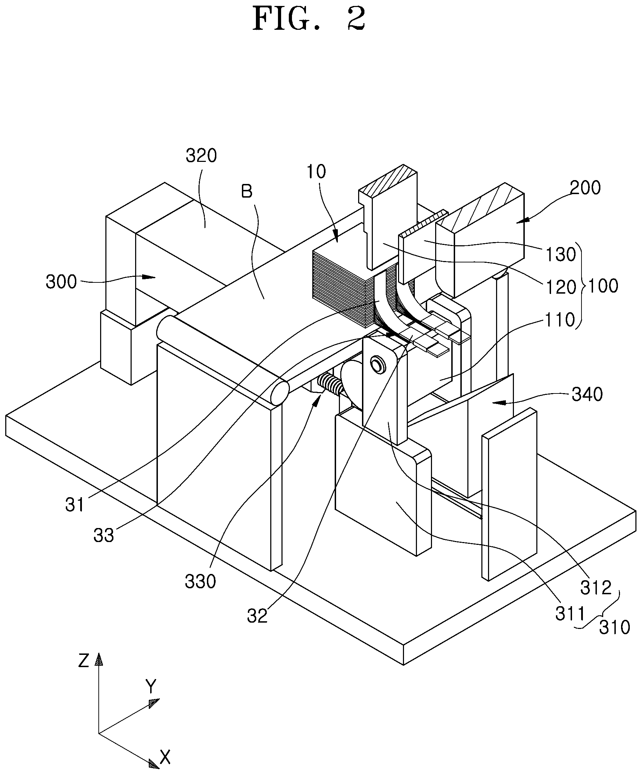

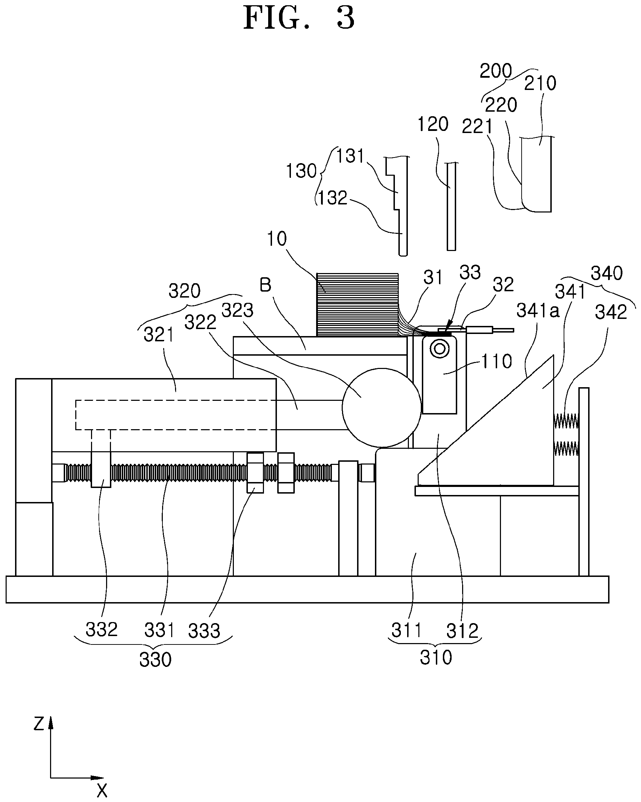

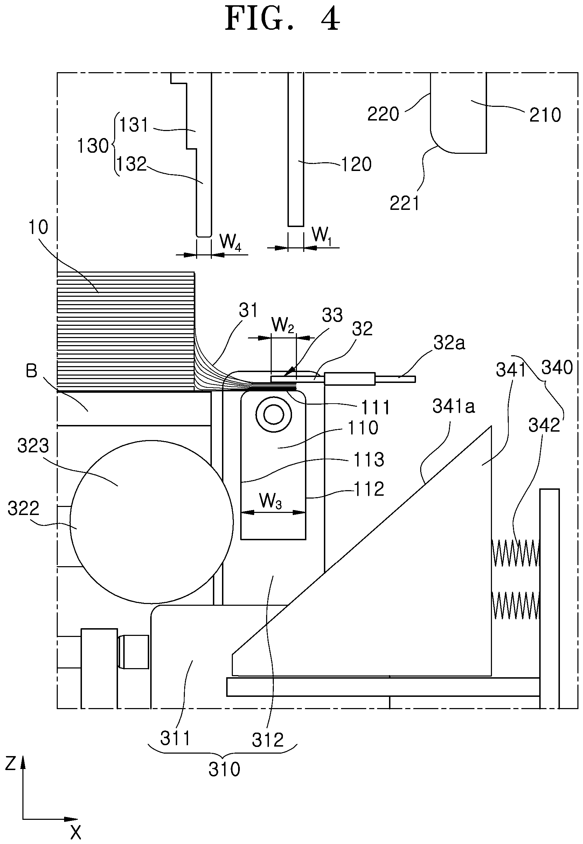

FIG. 2 is a perspective view schematically illustrating a configuration of the secondary battery manufacturing apparatus according to one embodiment of the present disclosure, FIG. 3 is a side view schematically illustrating a configuration of the secondary battery manufacturing apparatus according to an embodiment of the present disclosure, and FIG. 4 is an enlarged view schematically illustrating a configuration of the secondary battery manufacturing apparatus according to an embodiment of the present disclosure.

Referring to FIGS. 2 to 4, the electrode assembly 10 may be seated on a separately prepared table B. In this case, as the first bending part 35 and the second bending part 36 are not formed in the lead tab 30, the lead tab 30 may have a shape extending in a straight line from a side surface of the electrode assembly 10. As an example, the lead tab 30 may extend from the electrode assembly 10 to be parallel to the X-axis direction based on FIG. 2.

The secondary battery manufacturing apparatus includes a support member 100, a first bending member 200, and a second bending member 300.

The support member 100 may support the lead tab 30 extending from the electrode assembly 10. The support member 100 may function as a component that prevents the movement of the lead tab 30 during operation of the first bending member 200 to be described below. In addition, the support member 100 may function as a component that directly performs a bending work for the lead tab 30, when the second bending member 300 to be described below is operated.

The support member 100 may include a first jig 110 and a second jig 120.

The first jig 110 may be disposed to face one side of the lead tab 30. The first jig 110 may be installed to be reciprocally movable in a direction parallel to a first direction. The first jig 110 may be brought into contact with or separated from one side of the lead tab 30 while being reciprocated in the direction parallel to the first direction. The first direction to be described below may refer to a direction perpendicular to the extending direction of the lead tab 30, and may refer to a direction parallel to a Z-axis, i.e., a vertical direction based on FIG. 2.

As an example, the first jig 110 may be disposed below the lead tab 30.

The first jig 110 may include a first contact surface 111 and a second contact surface 112.

The first contact surface 111 of the first jig 110 may be disposed to vertically face a lower surface of the coupling part 33. The second contact surface 112 of the first jig 110 may be disposed to intersect the first contact surface 111. Based on FIG. 3, the first contact surface 111 may refer to an upper surface of the first jig 110 facing a lower surface of the lead tab 30, and the second contact surface 112 may refer to a right side surface of the first jig 110 disposed perpendicular to the first contact surface 111. An angle between the first contact surface 111 and the second contact surface 112 may be 90°.

The first jig 110 may further include a third contact surface 113.

The third contact surface 113 may be disposed on the opposite side of the second contact surface 112. As an example, the third contact surface 113 may refer to a left side surface of the first jig 110 disposed perpendicular to the first contact surface 111.

The first jig 110 may be supported by a support body 310, which will be described below, below the lead tab 30. The first jig 110 may be lifted and lowered in a direction parallel to the first direction, i.e., in the vertical direction. As an example, the first jig 110 may be lifted and lowered in the vertical direction through expansion and contraction movements of the support body 310. As the first jig 110 is moved upwardly, the first contact surface 111 may be brought into contact with the lower surface of the coupling part 33 and may press the coupling part 33 upward.

When the first contact surface 111 is brought into contact with the lower surface of the coupling part 33, an end portion 32a of the electrode lead 32 located on the opposite side of the coupling part 33 may protrude a predetermined distance to the outside of the first contact surface 111.

The second jig 120 may be spaced apart from the first jig 110. The second jig 120 may be disposed to face the other side of the lead tab 30. The second jig 120 may be installed to be reciprocally movable in the direction parallel to the first direction. The second jig 120 may be brought into contact with or separated from the other side of the lead tab 30 while being reciprocated in the direction parallel to the first direction.

The first jig 110 and the second jig 120 may be brought into contact with or separated from both sides of the lead tab 30 while being moved toward or away from each other in the direction parallel to the first direction. When the first jig 110 and the second jig 120 are brought into contact with both sides of the lead tab 30, the first jig 110 and the second jig 120 press both sides of the lead tab 30 in opposite directions to prevent the movement of the lead tab 30.

As an example, the second jig 120 may be formed to have a substantially bar shape. The second jig 120 may be disposed above the lead tab 30. A lower surface of the second jig 120 may be disposed to face an upper surface of the coupling part 33 in the first direction, i.e., in the vertical direction.

The second jig 120 may be lifted and lowered in the vertical direction. As an example, the second jig 120 is supported by various driving devices such as a press, a hydraulic cylinder, and the like, above the lead tab 30 and may be lifted and lowered in the vertical direction by the operation of the driving device. As the second jig 120 is moved downwardly, the lower surface of the second jig 120 may be brought into contact with the upper surface of the coupling part 33 and may press the coupling part 33 downwardly.

A width W₁ of the second jig 120 in a direction perpendicular to the first direction may be less than a width W₂ of the coupling part 33 in the direction perpendicular to the first direction. The width W₁ of the second jig 120 in the direction perpendicular to the first direction may refer to the extending direction of the lead tab 30, i.e., the width of the second jig 120 parallel to the X-axis direction based on FIG. 3. The width W₂ of the coupling part 33 in the direction perpendicular to the first direction may refer to an overlapping length of the electrode tab 31 and the electrode lead 32 parallel to the X-axis direction based on FIG. 3. The width W₂ of the coupling part 33 in the direction perpendicular to the first direction may be 1.2 mm.

As an example, a ratio W₁/W₂ of the width W₁ of the second jig 120 to the width W₂ of the coupling part 33 may be greater than or equal to 0.5 and less than 1. That is, the width W₁ of the second jig 120 in the direction perpendicular to the first direction may have a size greater than or equal to 50% and less than 100% of the width W₂ of the coupling part 33 in the direction perpendicular to the first direction. When the ratio W₁/W₂ of the width W₁ of the second jig 120 to the width W₂ of the coupling part 33 is less than 0.5, a supporting force by which the second jig 120 supports the lead tab 30 may be excessively reduced. When the ratio W₁/W₂ of the width W₁ of the second jig 120 to the width W₂ of the coupling part 33 is greater than or equal to 1, the second jig 120 may press an outer side region of the coupling part 33, which may damage the electrode tab 31 or the electrode lead 32.

A width W₃ of the first jig 110 in the direction perpendicular to the first direction may be greater than the width W₂ of the coupling part 33 in the direction perpendicular to the first direction. In this case, a portion of the first contact surface 111 of the first jig 110 may be in contact with the lower surface of the coupling part 33, and the remaining portion thereof may be in contact with a lower surface of the electrode tab 31.

The support member 100 may further include a guide jig 130.

The guide jig 130 may be spaced apart from the second jig 120 and may support the electrode assembly 10. The guide jig 130 may function as a component that prevents the movement of the electrode assembly 10 during a bending work performed using the first bending member 200.

The guide jig 130 may include a guide block 131 and a guide member 132.

The guide block 131 may be disposed between the electrode assembly 10 and the second jig 120. The guide block 131 may be installed to be reciprocally movable in the direction parallel to the first direction.

As an example, the guide block 131 may be formed to have a substantially bar shape. The guide block 131 may be disposed above the lead tab 30. A lower surface of the guide block 131 may be disposed to face the electrode tab 31 in the vertical direction.

The guide block 131 may be lifted and lowered in the vertical direction. As an example, the guide block 131 may be supported by various driving devices, such as a press, a hydraulic cylinder, and the like, above the lead tab 30 and may be lifted and lowered in the vertical direction by the operation of the driving device. As the guide block 131 is moved downwardly, the lower surface of the guide block 131 may be moved in a direction approaching an upper surface of the electrode tab 31.

The guide member 132 may extend from the guide block 131 and may be brought into contact with or separated from the electrode assembly 10 depending on a moving direction of the guide block 131. As an example, the guide member 132 may be formed to have a plate shape extending vertically downwardly from the lower surface of the guide block 131.

When the guide block 131 is moved upward, one surface of the guide member 132 may be separated from the side surface of the electrode assembly 10 from which the lead tab 30 extends. When the guide block 131 is moved downwardly, one surface of the guide member 132 may be brought into contact with the side surface of the electrode assembly 10 from which the lead tab 30 extends. Accordingly, the guide member 132 may prevent the electrode assembly 10 from being moved in a direction perpendicular to the first direction, i.e., in the X-axis direction during the operation of the first bending member 200 to be described below.

A width W₄ of the guide member 132 in a direction perpendicular to the first direction may be greater than or equal to 0.5 mm and less than or equal to 0.7 mm. Accordingly, the guide member 132 may be prevented from interfering with the second jig 120. An end portion of the guide member 132 may be polished to prevent damage to the electrode assembly 10 and the electrode tab 31.

The first bending member 200 may be disposed to be spaced apart from the support member 100. The first bending member 200 may be movably installed outside the support member 100. The first bending member 200 may function as a component that is moved on one side to press the electrode lead 32 to form the first bending part 35 on the electrode lead 32.

The first bending member 200 may include a pressing block 210 and a pressing surface 220.

The pressing block 210 may form a schematic exterior of the first bending member 200 and may be disposed to be spaced apart from the first jig 110 and the second jig 120. The pressing block 210 may be installed to be reciprocally movable in a direction parallel to a second direction inclined with respect to the first direction. Here, the second direction may refer to a direction inclined from an X-axis toward the Z-axis at a predetermined angle based on FIG. 3. The inclination angle of the second direction with respect to the first direction may be variously changed in design within the range of 90°.

As an example, the pressing block 210 may be disposed above the lead tab 30, and may be spaced apart from the end portion 32a of the electrode lead 32, which protrudes from the first contact surface 111, in a direction parallel to the second direction.

The pressing block 210 is supported by various driving devices, such as a press, a hydraulic cylinder, and the like, above the lead tab 30 and may be reciprocated in a direction parallel to the second direction by the operation of the driving device.

The pressing surface 220 may be disposed at one side of the pressing block 210 and interlocked with the movement of the pressing block 210 to press the electrode lead 32 toward the first jig 110.

As an example, the pressing surface 220 may refer to a surface in direct contact with the end portion 32a of the electrode lead 32 among circumferential surfaces of the pressing block 210.

As the pressing block 210 is moved in a direction parallel to the second direction toward the end portion 32a of the electrode lead 32, the pressing surface 220 may be brought into contact with the end portion 32a of the electrode lead 32 and may press the end portion 32a of the electrode lead 32 in a direction parallel to the second direction. Accordingly, when the pressing surface 220 presses the end portion 32a of the electrode lead 32 in the direction perpendicular to the first direction, the magnitude of shear stress applied to the electrode lead 32 may be reduced, and damage to the electrode lead 32 may be prevented.

The electrode lead 32 may be bent in a first bending direction by a pressing force applied from the pressing surface 220 and may be brought into contact with the second contact surface 112. As the electrode lead 32 is brought into contact with the second contact surface 112, the first bending part 35 may be formed in a central region of the electrode lead 32 facing the boundary of the first contact surface 111 and the second contact surface 112. The first bending direction is a direction in which the end portion 32a of the electrode lead 32 is bent toward the second contact surface 112, and may refer to a clockwise direction based on FIG. 3.

A damage prevention part 221 may be formed on the pressing surface 220. When the pressing surface 220 presses the electrode lead 32, the damage prevention part 221 may be disposed at an edge side of a lower end portion of the pressing block 210, which is preferentially brought into contact with the electrode lead 32. The damage prevention part 221 may be formed to have a curved shape curved with a predetermined curvature. Accordingly, the damage prevention part 221 may more effectively prevent damage to the electrode lead 32 by dispersing the pressing force applied to the electrode lead 32 when the electrode lead 32 is brought into contact with the electrode lead 32.

The second bending member 300 is connected to the support member 100, and may move the support member 100 to form the second bending part 36 on the electrode tab 31.

The second bending member 300 may include a support body 310 and a driving member 320.

The support body 310 may rotatably support the first jig 110. The support body 310 may include a first support body 311 and a second support body 312.

The first support body 311 may be disposed to face one side of the lead tab 30 and may support the second support body 312 to be described below.

As an example, the first support body 311 may be disposed below the lead tab 30 and fixed on the ground. The shape of the first support body 311 is not limited to the shape illustrated in FIGS. 2 to 4, and may be changed in design to have various shapes.

A pair of first support bodies 311 may be provided. The pair of first support bodies 311 may be respectively disposed on both sides of the first jig 110 with the first jig 110 interposed therebetween. As an example, based on FIG. 2, the pair of first support bodies 311 may be disposed to be spaced apart from each other in a Y-axis direction with the first jig 110 interposed therebetween.

The second support body 312 may extend from the first support body 311 and may be connected to the first jig 110.

As an example, the second support body 312 may extend upwardly from an upper surface of the first support body 311. A pair of second support bodies 312 may be provided. The second support bodies 312 may individually extend from different first support bodies 311, respectively.

The first jig 110 may be disposed between the pair of second support bodies 312. An upper end portion of the first jig 110 may be rotatably connected to the second support body 312 through a rotation shaft or the like. In this case, the rotation shaft of the first jig 110 may be disposed in parallel with the Y-axis direction based on FIG. 2. The first jig 110 may be rotated in a first rotational direction and in a direction opposite to the first rotational direction with respect to the second support body 312 by the driving member 320 to be described below. The first rotational direction may refer to a counterclockwise direction based on FIG. 3.

As the first jig 110 is rotated in the first rotational direction, the first jig 110 may form the second bending part 36 by bending the electrode tab 31 in a second bending direction. The second bending direction is a direction opposite to the first bending direction, and may refer to a direction in which one end portion of the electrode tab 31 connected to the electrode lead 32 is bent toward the electrode assembly 10. As an example, the second bending direction may refer to the counterclockwise direction based on FIG. 3.

The support body 310 may be provided to be stretchable in the first direction. Accordingly, the first jig 110 may be reciprocated in the direction parallel to the first direction by the stretching operation of the support body 310. As an example, the second support body 312 may be connected to the first support body 311 to be movable in the vertical direction. The second support body 312 may be connected to a powering device (not shown) such as a motor, a hydraulic cylinder, or the like, and may be vertically lifted and lowered by a driving force generated by the powering device. The first jig 110 may be brought into contact with or separated from the lower surface of the coupling part 33 while being vertically moved together with the second support body 312.

The driving member 320 is disposed to face the first jig 110 and rotates the first jig 110 with respect to the support body 310. That is, the driving member 320 may function as a component that generates the rotational motion of the first jig 110 by its own driving force.

The driving member 320 may include a cylinder body 321, a cylinder rod 322, and a torque block 323.

The cylinder body 321 may form an exterior of one side of the driving member 320 and movably support the cylinder rod 322 to be described below.

As an example, the cylinder body 321 may be disposed below the table B to face the third contact surface 113 of the first jig 110. The cylinder body 321 may be disposed to be spaced apart from the third contact surface 113 in the X-axis direction by a predetermined distance. The cylinder body 321 may be fixed on the ground through a separate bracket (not shown) or the like. The cylinder body 321 may receive power from the outside to generate a driving force to move the cylinder rod 322, such as hydraulic pressure, magnetic force, and rotational force.

The cylinder rod 322 is movably connected to the cylinder body 321. As an example, the cylinder rod 322 may be formed to have a substantially bar shape. A longitudinal direction of the cylinder rod 322 may be disposed to be perpendicular to the first direction.

As an example, the longitudinal direction of the cylinder rod 322 may be disposed parallel to the X-axis. One end portion of the cylinder rod 322 may be inserted into the cylinder body 321. The other end portion of the cylinder rod 322 may be disposed to face the third contact surface 113 of the first jig 110. The cylinder rod 322 may be reciprocated in the longitudinal direction by the driving force generated from the cylinder body 321.

The torque block 323 may be connected to the cylinder rod 322, and may press or release the first jig 110 depending on a moving direction of the cylinder rod 322. As an example, the torque block 323 may be connected to the other end portion of the cylinder rod 322 disposed to face the third contact surface 113. As the other end portion of the cylinder rod 322 is moved toward the third contact surface 113, the torque block 323 may be brought into contact with the third contact surface 113, and may press the third contact surface 113 in a direction in which the first jig 110 is rotated in the first rotational direction. As the other end portion of the cylinder rod 322 is moved in a direction away from the third contact surface 113, the torque block 323 may be spaced apart from the third contact surface 113 and may release the pressing force applied to the third contact surface 113.

The torque block 323 may have a curved surface. As an example, the torque block 323 may be formed to have a circular cross-sectional shape. Accordingly, the torque block 323 may maintain a constant contact area with the third contact surface 113 during the rotation of the first jig 110.

The second bending member 300 may further include a stopper 330.

The stopper 330 may selectively restrict the movement of the cylinder rod 322. That is, the stopper 330 may function as a component that restricts the range in which the cylinder rod 322 is moved toward the third contact surface 113. Accordingly, the stopper 330 may further improve the accuracy of the bending work for the electrode tab 31 by restricting the first jig 110 from rotating beyond a set rotation angle.

The stopper 330 may include a stopper body 331, a first stopper 332, and a second stopper 333.

The stopper body 331 may be spaced apart from the cylinder body 321 and may support the first stopper 332 and the second stopper 333, which will be described below, as a whole. As an example, the stopper body 331 may be formed to have a substantially bar shape. The stopper body 331 may be disposed below the cylinder body 321. The stopper body 331 may be fixed to a lower side of the cylinder body 321 through a separate bracket or the like. A longitudinal direction of the stopper body 331 may be disposed parallel to a longitudinal direction of the cylinder rod 322.

The first stopper 332 may extend from the cylinder rod 322 and be movably connected to the stopper body 331. As an example, an upper end portion of the first stopper 332 may be integrally connected to the cylinder rod 322, and a lower end portion of the first stopper 332 may pass through the cylinder body 321 and protrude downward from the cylinder body 321. The lower end portion of the first stopper 332 may be formed to have the shape of a ring surrounding an outer circumferential surface of the stopper body 331. When the cylinder rod 322 moves, the first stopper 332 may be reciprocated in the longitudinal direction of the stopper body 331. When the torque block 323 is located at an initial position thereof, the first stopper 332 may be located at one end portion side of the stopper body 331 located relatively far from the first jig 110.

The second stopper 333 may be fixed to the stopper body 331. The second stopper 333 may be brought into contact with the first stopper 332 as the torque block 323 is moved a set distance from the initial position of the first stopper 332 toward the first jig 110. As an example, the second stopper 333 may be formed to have a hollow ring shape, and an inner circumferential surface thereof may be fixed to the outer circumferential surface of the stopper body 331. The second stopper 333 may be disposed on the other end portion side of the stopper body 331 located relatively close to the first jig 110. Accordingly, when the torque block 323 is moved toward the first jig 110, the second stopper 333 may be brought into contact with the first stopper 332. A separation distance between the first stopper 332 and the second stopper 333 may be variously changed in design depending on the initial position of the torque block 323 or the like.

The second stopper 333 may be connected to the stopper body 331 to be adjustable in position. In one example, screw threads may be formed on the outer circumferential surface of the stopper body 331 and the inner circumferential surface of the second stopper 333, and the second stopper 333 may be screwed to the stopper body 331. The second stopper 333 may be moved in the longitudinal direction of the stopper body 331 when rotating around the stopper body 331. Accordingly, a user may vary a rotation angle of the first jig 110 by adjusting a contact position of the second stopper 333 and the first stopper 332.

The second bending member 300 may further include a buffer member 340.

The buffer member 340 may be disposed to face the torque block 323 and may support the torque block 323. The buffer member 340 may function as a component that prevents the torque block 323 from sagging due to the weight of the first jig 110 while the torque block 323 rotates the first jig 110, and restricts rapid movement of the torque block 323 before the stopper 330 is operated.

The buffer member 340 may include an opposing member 341 and an elastic member 342.

The opposing member 341 may be disposed to face the torque block 323 in a moving direction of the torque block 323. The opposing member 341 may be installed to be reciprocally movable in a direction parallel to the moving direction of the torque block 323. As an example, a lower surface of the opposing member 341 may be movably seated, e.g. to slide, on a separate support surface in the moving direction of the torque block 323, i.e., in a direction parallel to the X-axis.

An inclined surface 341a may be formed on a surface of the opposing member 341 facing the torque block 323. The inclined surface 341a may be formed to be inclined in a tangential direction with respect to the torque block 323. Accordingly, when the inclined surface 341a is brought into contact with the torque block 323, the inclined surface 341a may prevent the torque block 323 from sagging due to its own weight by applying a supporting force to the torque block 323 in a direction in which the torque block 323 is brought into contact with the first jig 110.

The elastic member 342 may be connected to the opposing member 341, and may apply an elastic force to the opposing member 341 in a direction toward the torque block 323. As an example, the elastic member 342 may be formed to have a substantially coil spring shape. The elastic member 342 may be disposed such that a longitudinal direction thereof is in parallel with the moving direction of the torque block 323, i.e., the X-axis direction. Both end portions of the elastic member 342 may be connected to a wall surface provided in the outside of the elastic member 342 and a rear surface of the opposing member 341 opposite to the inclined surface 341a, respectively. The elastic member 342 may be compressed in the longitudinal direction as the torque block 323 is brought into contact with the opposing member 341, and due to the accumulated elastic restoring force, an elastic force may be applied to the opposing member 341 in a direction toward the torque block 323. Accordingly, the elastic restoring force of the elastic member 342 may allow the contact state of the torque block 323 with the opposing member 341 to be maintained and the rapid movement of the torque block 323 to be prevented. The elastic member 342 may be formed as a single piece or as multiple pieces.

Hereinafter, a secondary battery manufacturing method according to one embodiment of the present disclosure will be described.

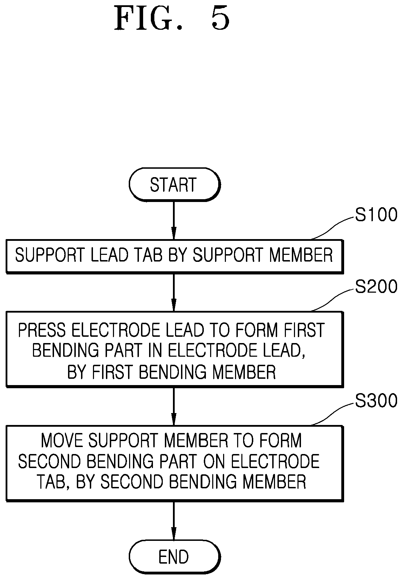

FIG. 5 is a flowchart schematically illustrating a sequence of the secondary battery manufacturing method according to one embodiment of the present disclosure.

Referring to FIG. 5, in a state in which an electrode assembly 10 is seated on the table B, the support member 100 supports a lead tab 30 (S100).

In operation S100, the lead tab 30 may extend from one side surface of the electrode assembly 10 in the X-axis direction. More specifically, as a first bending part 35 and a second bending part 36 are not formed in the lead tab 30, an electrode tab 31 and an electrode lead 32 may extend parallel to the X-axis direction.

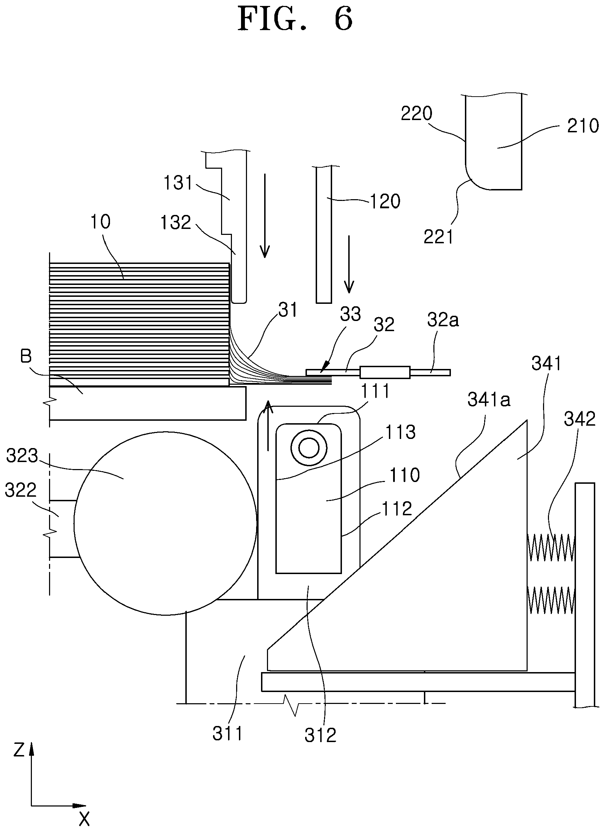

FIG. 6 is a view schematically illustrating a process in which the support member supports the lead tab.

Describing the operation in which the support member 100 supports the lead tab 30 in more detail with reference to FIG. 6, the first jig 110 and the second jig 120 are moved toward the lead tab 30 in the first direction and respectively press both sides of the lead tab 30 in different directions.

As an example, the first jig 110 may be moved upwardly from a lower side of the lead tab 30, and the first contact surface 111 may be brought into contact with a lower surface of a coupling part 33.

In addition, the second jig 120 may be moved downwardly from an upper side of the lead tab 30, and a lower surface of the second jig 120 may be brought into contact with an upper surface of the coupling part 33.

Accordingly, the coupling part 33 may be firmly fixed by a pressing force applied between the first jig 110 and the second jig 120.

In operation S100, the guide jig 130 may be moved in a direction parallel to the first direction and may support the electrode assembly 10.

As an example, the guide block 131 may be moved downwardly from the upper side of the lead tab 30, and one surface of the guide member 132 may be brought into contact with the side surface of the electrode assembly 10 from which the lead tab 30 extends. Accordingly, the guide member 132 may prevent the electrode assembly 10 from moving in the X-axis direction.

After operation S100, the first bending member 200 presses the electrode lead 32 to form the first bending part 35 in the electrode lead 32 (S200).

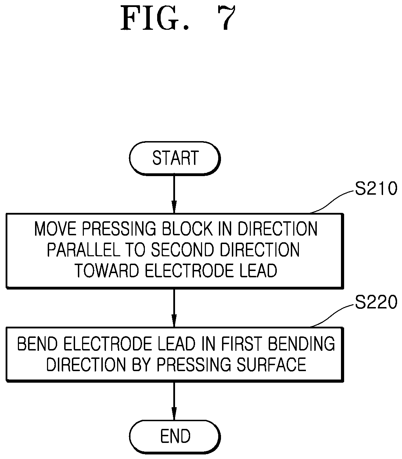

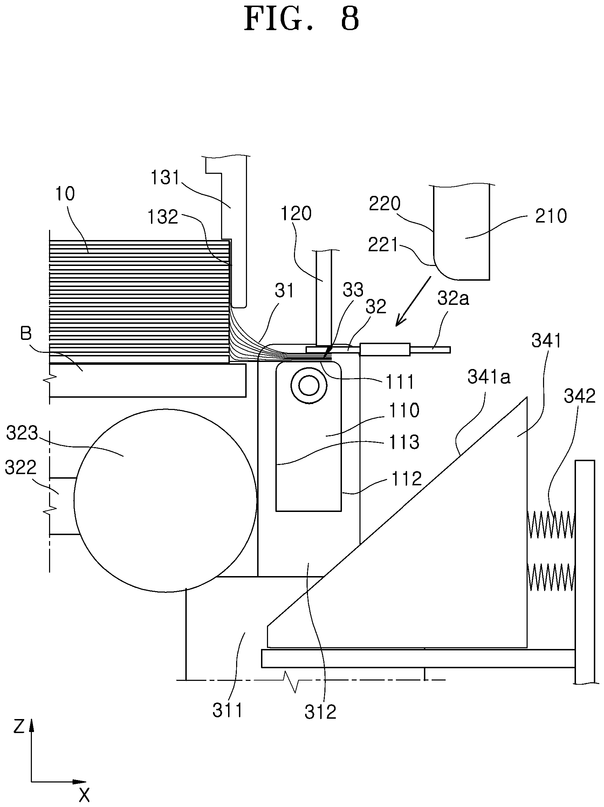

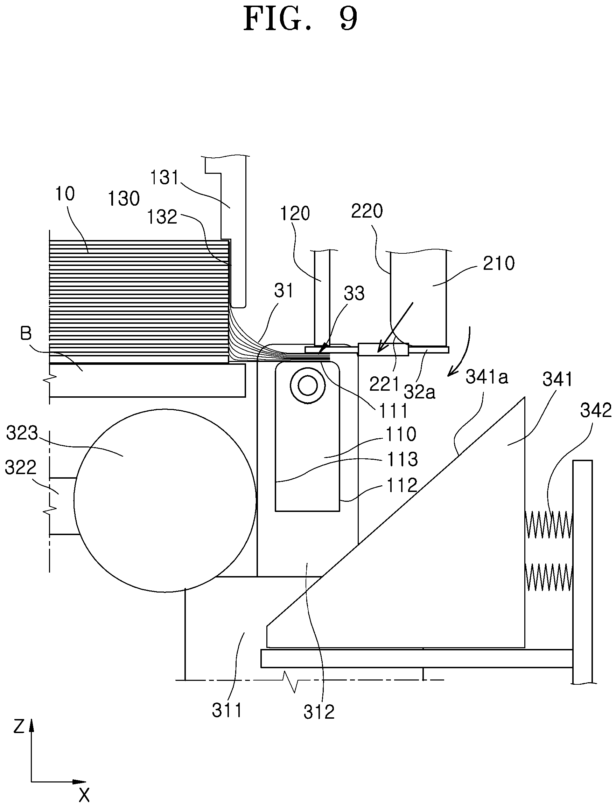

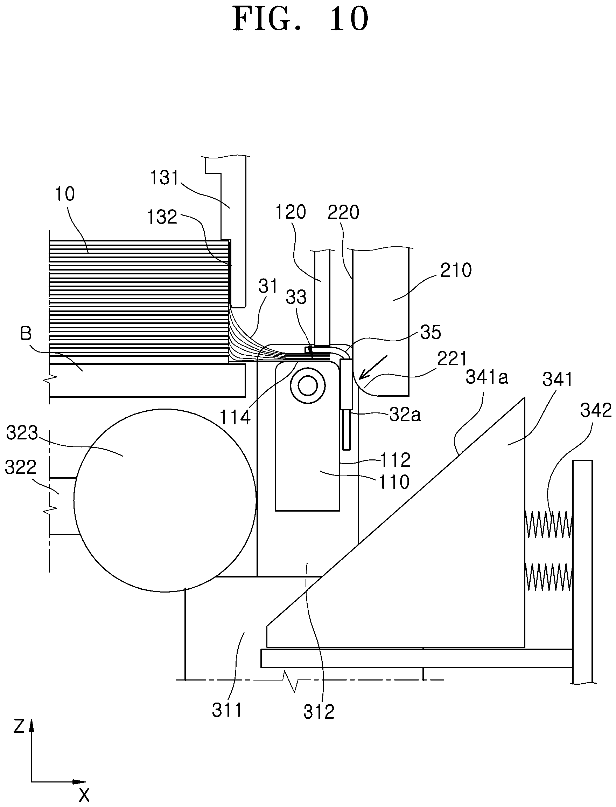

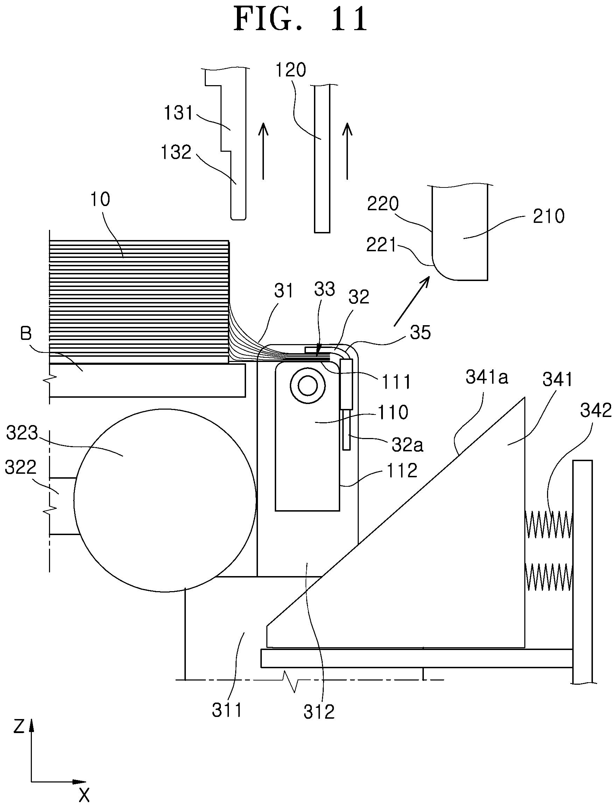

FIG. 7 is a flowchart schematically illustrating a sequence of the operation in which the first bending member forms the first bending part on the electrode lead, and FIGS. 8 to 11 are views schematically illustrating a process in which the first bending member forms the first bending part on the electrode lead.

Describing operation S200 in more detail with reference to FIGS. 7 to 11, the pressing block 210 is moved in a direction parallel to the second direction toward an end portion 32a of the electrode lead 32 (S210).

Thereafter, the pressing surface 220 presses the electrode lead 32 and forms the first bending part 35 by bending the electrode lead 32 in the first bending direction (S220).

More specifically, the pressing block 210 is moved more than a set distance in the second direction toward the end portion 32a of the electrode lead 32, and the pressing surface 220 is brought into contact with the end portion 32a of the electrode lead 32 and presses the end portion 32a of the electrode lead 32 in a direction parallel to the second direction.

By a pressing force applied from the pressing surface 220, the end portion 32a of the electrode lead 32 is rotated in a direction toward the second contact surface 112, for example, in the clockwise direction, and is brought into contact with the second contact surface 112.

As the electrode lead 32 is in contact with the second contact surface 112, the first bending part 35 may be formed in a central region of the electrode lead 32 facing the boundary of the first contact surface 111 and the second contact surface 112.

After the first bending part 35 is formed in the electrode lead 32, the pressing block 210 is moved in a direction away from the electrode lead 32, and the pressing surface 220 is separated from the electrode lead 32.

The second jig 120 and the guide jig 130 are moved upwardly and are separated from the coupling part 33 and the electrode assembly 10, respectively.

After operation S200, the second bending member 300 moves the support member 100 to form the second bending part 36 on the electrode tab 31 (S300).

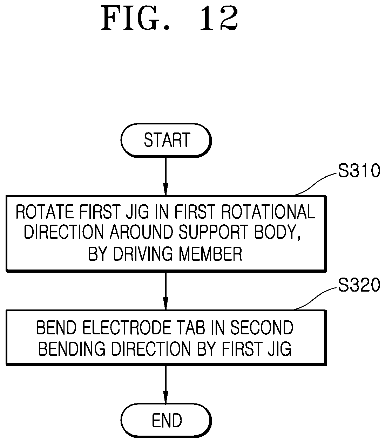

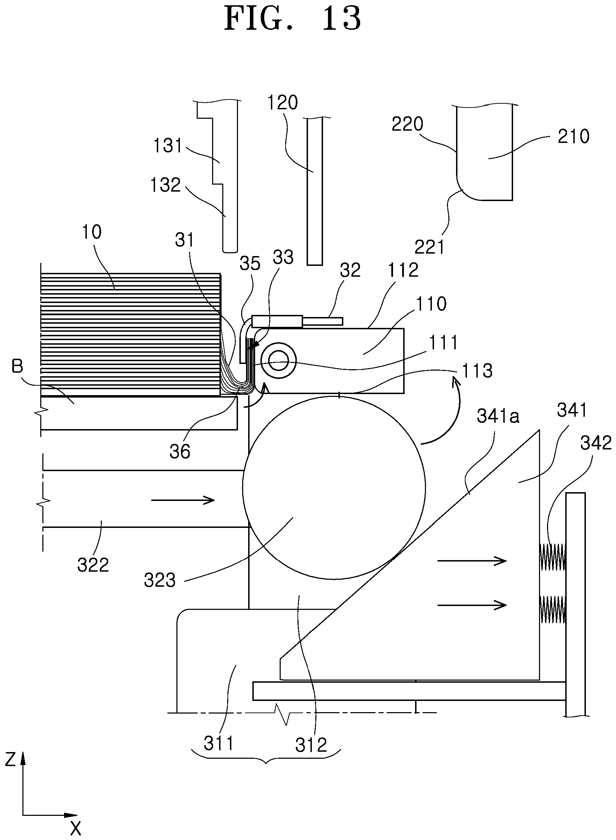

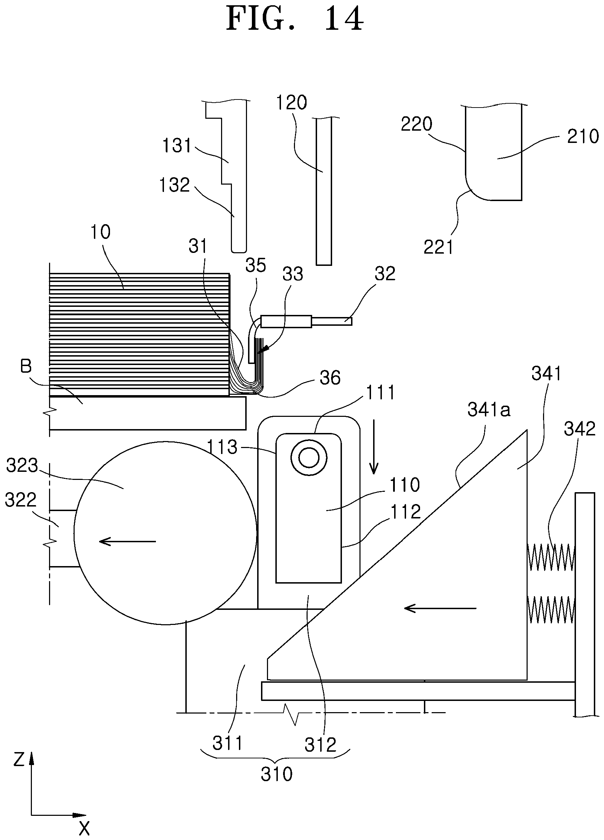

FIG. 12 is a flowchart schematically illustrating a sequence of the operation in which the second bending member moves the support member to form the second bending part on the electrode tab, and FIGS. 13 and 14 are views schematically illustrating the process in which the second bending member moves the support member to form the second bending part on the electrode tab.

Describing operation S300 in more detail with reference to FIGS. 12 to 14, the driving member 320 rotates the first jig 110 in the first rotational direction with respect to the support body 310 (S310).

In operation S310, the cylinder rod 322 is moved in a direction toward the third contact surface 113 of the first jig 110 by a driving force generated from the cylinder body 321.

As the cylinder rod 322 is moved more than a set distance in a direction toward the third contact surface 113, the torque block 323 is brought into contact with the third contact surface 113 and presses the first jig 110.

The first jig 110 is rotated with respect to the support body 310 in the first rotational direction, i.e., in the counterclockwise direction, by a pressing force applied from the torque block 323.

In this process, the torque block 323 is brought into contact with the inclined surface 341a of the opposing member 341, and the inclined surface 341a applies a supporting force in a direction in which the contact state of the torque block 323 with the third contact surface 113 is maintained.

The opposing member 341 is moved in a direction of compressing the elastic member 342 by the pressing force applied from the torque block 323.

The elastic member 342 presses the opposing member 341 in a direction opposite to a moving direction of the torque block 323 to maintain a moving speed of the torque block 323 to a certain magnitude or less.

As the torque block 323 is moved beyond a set distance, the first stopper 332 is brought into contact with the second stopper 333, and the rotation of the first jig 110 may be stopped.

In this case, the final angle at which the first jig 110 is rotated in the first rotational direction may be 95° with respect to an initial position of the first jig 110.

Thereafter, the first jig 110 is rotated with respect to the support body 310 in the first rotational direction to bend the electrode tab 31 in the second bending direction and the second bending part 36 is formed (S320).

More specifically, as the first jig 110 is rotated in the counterclockwise direction in a state in which the first contact surface 111 is in contact with the lower surface of the coupling part 33, and one end portion of the electrode tab 31 is fixed to the electrode assembly 10, a bending stress is generated between both end portions of the electrode tab 31.

The other end portion of the electrode tab 31 disposed to face the coupling part 33 is bent in the counterclockwise direction toward the electrode assembly 10 around the point at which the bending stress acts.

As the other end portion of the electrode tab 31 is bent in the counterclockwise direction, the second bending part 36 may be formed at a point at which the bending stress acts between both end portions of the electrode tab 31.

According to the present disclosure, a first bending part and a second bending part can be independently processed by a first bending member and a second bending member, respectively, thereby improving the efficiency and accuracy of a bending work for a lead tab.

According to the present disclosure, a bending direction and a bending angle of a second bending part can be precisely adjusted by changing a rotation direction and a rotation angle of a first jig, thereby improving a bending quality of the second bending part and preventing the degradation of energy density caused by lifting of the second bending part.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

## Claims

1. A secondary battery manufacturing apparatus comprising:
a support member configured to support a lead tab comprising an electrode tab extending from an electrode assembly and an electrode lead connected to the electrode tab;
a first bending member spaced apart from the support member and configured to press the electrode lead such that a first bending part is formed on the electrode lead; and
a second bending member connected to the support member and configured to move the support member such that a second bending part is formed on the electrode tab.

2. The secondary battery manufacturing apparatus as claimed in claim 1, wherein the support member comprises:
a first jig disposed to face one side of the lead tab; and
a second jig spaced apart from the first jig and disposed to face another side of the lead tab,
wherein the first jig and the second jig are brought into contact with or separated from the lead tab while being reciprocated in a direction parallel to a first direction.

3. The secondary battery manufacturing apparatus as claimed in claim 2, wherein
the lead tab further comprises a coupling part disposed between the electrode tab and the electrode lead, and
the first jig and the second jig are disposed to face each other with the coupling part interposed therebetween.

4. The secondary battery manufacturing apparatus as claimed in claim 3, wherein a width of the second jig in a direction perpendicular to the first direction is less than a width of the coupling part in the direction perpendicular to the first direction.

5. The secondary battery manufacturing apparatus as claimed in claim 4, wherein a ratio of the width of the second jig to the width of the coupling part is greater than or equal to 0.5 and less than 1.

6. The secondary battery manufacturing apparatus as claimed in any one of claims 2 to 5, wherein the support member further comprises a guide jig spaced apart from the second jig and configured to support the electrode assembly.

7. The secondary battery manufacturing apparatus as claimed in claim 6, wherein the guide jig comprises:
a guide block disposed between the electrode assembly and the second jig and installed to be reciprocally movable in the direction parallel to the first direction; and
a guide member extending from the guide block and brought into contact with or separated from the electrode assembly depending on a moving direction of the guide block.

8. The secondary battery manufacturing apparatus as claimed in any one of claims 2 to 7, wherein the first bending member comprises:
a pressing block spaced apart from the first jig and installed to be reciprocally movable in a direction parallel to a second direction inclined with respect to the first direction; and
a pressing surface disposed at one side of the pressing block and interlocked with a movement of the pressing block to press the electrode lead toward the first jig.

9. The secondary battery manufacturing apparatus as claimed in claim 8, wherein the first jig comprises:
a first contact surface brought into contact with one side of the lead tab; and
a second contact surface disposed to intersect the first contact surface,
an end portion of the electrode lead protrudes from the first contact surface, and
the end portion of the electrode lead protruding from the first contact surface and being bent toward the second contact surface by a pressing force applied from the pressing surface.

10. The secondary battery manufacturing apparatus as claimed in claim 8 or claim 9, wherein the pressing surface is disposed at an edge side of the pressing block and comprises a damage prevention part having a curved shape.

11. The secondary battery manufacturing apparatus as claimed in any one of claims 2 to 10, wherein the second bending member comprises:
a support body configured to rotatably support the first jig; and
a driving member disposed to face the first jig and configured to rotate the first jig around the support body, and
the electrode tab being bent toward the electrode assembly as the first jig is rotated in a first rotational direction.

12. The secondary battery manufacturing apparatus as claimed in claim 11, wherein the driving member comprises:
a cylinder body;
a cylinder rod movably connected to the cylinder body; and
a torque block connected to the cylinder rod and configured to press or release the first jig depending on a moving direction of the cylinder rod.

13. A secondary battery manufacturing method comprising:
supporting, by a support member, a lead tab, which comprises an electrode tab extending from an electrode assembly and an electrode lead connected to the electrode tab;
forming by pressing the electrode lead by a first bending member a first bending part on the electrode lead; and
forming by moving the support member by a second bending member a second bending part on the electrode tab.

14. The secondary battery manufacturing method as claimed in claim 13, wherein the support member comprises:
a first jig disposed to face one side of the lead tab; and
a second jig spaced apart from the first jig and disposed to face the other side of the lead tab, and
in supporting the lead tab, the first jig and the second jig are moved in a direction parallel to a first direction and are brought into contact with both sides of the lead tab, respectively.

15. The secondary battery manufacturing method as claimed in claim 14, wherein the first bending member comprises:
a pressing block spaced apart from the first jig and installed to be reciprocally movable in a direction parallel to a second direction inclined with respect to the first direction; and
a pressing surface disposed at one side of the pressing block, and
the forming of the first bending part on the electrode lead comprises:
moving the pressing block toward the electrode lead in the direction parallel to the second direction; and
bending the electrode lead in a first bending direction by the pressing surface.
